# EUROPEAN PATENT APPLICATION

(11) **EP 4 628 433 A1**
(43) Date of publication of application: **08.10.2025**
(21) Application number: 24858156.3
(22) Date of filing: 24.07.2024
(51) Int. Cl.: B65G 47/24, B65G 35/00, B65G 43/08

(54) **CONVEYING DEVICE**

(30) Priority: 29.08.2023 CN 202322334069 U
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: CUI, Zhongtian, Ningde, Fujian 352100 (CN); ZUO, Wentao, Ningde, Fujian 352100 (CN)
(74) Representative: Ziebig Hengelhaupt Intellectual Property Attorneys Patentanwaltskanzlei PartGmbB
(86) International application number: PCT/CN2024/107302
(87) International publication number: WO 2025/044613

(57) **Abstract**

A conveying device (10) is disclosed. The conveying device (10) includes a first conveying mechanism (1), a second conveying mechanism (2), and a moving mechanism (3). The first conveying mechanism (1) is at least partially located below a fire-fighting component (20), and the first conveying mechanism (1) is capable of moving along a first direction (X). The second conveying mechanism (2) is located on one side of the first conveying mechanism (1). The moving mechanism (3) is formed with an accommodation space (311) and an avoidance space (312) arranged along a second direction (Y), and the second conveying mechanism (2) is disposed in the accommodation space (311). When the fire-fighting component (20) is triggered, the second conveying mechanism (2) moves along the second direction (Y) from the accommodation space (311) to the avoidance space (312), and the first conveying mechanism (1) moves along the first direction (X) to the accommodation space (311).

## Description

This application claims priority to Chinese Patent Application No. 202322334069.5, filed on August 29, 2023 and entitled "CONVEYING DEVICE", the entirety of which is incorporated into this application by reference.

### TECHNICAL FIELD

This application relates to the field of material transportation technology, and specifically, to a conveying device.

### BACKGROUND

Some existing conveying devices need to pass through fire doors. When a fire door descends in an emergency, materials below the fire door need to be cleared to implement isolation of a fire prevention zone. Currently, the conveying device is disconnected by flipping, but this results in a risk of materials falling onto a working surface from transportation positions, especially for high-risk material transportation.

### SUMMARY

In view of the above issue, this application provides a conveying device, so as to address a problem that battery cells are prone to damage.

To solve the above technical problem, a technical solution adopted by this application is to provide a conveying device including: a first conveying mechanism, at least partially located below a fire-fighting component, where the first conveying mechanism is capable of moving along a first direction; a second conveying mechanism, located on one side of the first conveying mechanism; and a moving mechanism, formed with an accommodation space and an avoidance space arranged along a second direction, where the second conveying mechanism is disposed in the accommodation space, and the second direction is perpendicular to the first direction; where when the fire-fighting component is triggered, the second conveying mechanism moves along the second direction from the accommodation space to the avoidance space, and the first conveying mechanism moves along the first direction to the accommodation space. In this application, when the fire-fighting component is triggered, isolation of a fire prevention zone is required. In this case, the second conveying mechanism can move along the second direction from the accommodation space of the moving mechanism into the avoidance space, and the first conveying mechanism can move along the first direction from below the fire-fighting component to the vacated accommodation space, leaving no objects in the space below the fire-fighting component, thereby effectively implementing isolation of the fire prevention zone and improving safety of material transportation. Moreover, since this application involves translating the first conveying mechanism and the second conveying mechanism as a whole, the risk of material dropping can be reduced, further enhancing the safety of material transportation. Additionally, moving the first conveying mechanism and the second conveying mechanism along two perpendicular directions can minimize the impact on the conveying route, making it more convenient to resume material transportation. Therefore, this application can improve the safety of material transportation, and enhance the reliability and working efficiency of the conveying device.

In some embodiments, the first direction includes a transportation direction of the conveying device, the second direction includes a vertical direction, and the avoidance space is located above the accommodation space. Through the above approach, the conveying device implements the movement of the first conveying mechanism and the second conveying mechanism by translation and lifting respectively. This not only can move away the first conveying mechanism from below the fire-fighting component to reduce the risk of material dropping from the conveying device, but also can reduce interference between the movements of the first conveying mechanism and the second conveying mechanism, and minimize the occupied area.

In some embodiments, the moving mechanism includes a housing and a first driving assembly, where the avoidance space and the accommodation space are formed in the housing, and the first driving assembly is disposed on the housing and connected to the second conveying mechanism, and is configured to drive the second conveying mechanism to move along the second direction. Through the above approach, the housing and the first driving assembly implement the moving mechanism, not only implementing automated movement of the second conveying mechanism, but also improving movement efficiency.

In some embodiments, the first driving assembly includes a first driving motor and a first belt, where the first belt sleeves and is rotatably connected to a driving shaft of the first driving motor, and the other end sleeves and is rotatably connected to a first rotating shaft of the housing, and the first belt is connected to a first connecting plate in the second conveying mechanism. Through the above approach, the first driving motor and the first belt implement the first driving assembly, enabling the second conveying mechanism to lift or translate. This not only results in a simple structure that is easy to implement, but also improves cleanliness of the working environment of the conveying device, reduces dust generation, and facilitates cleaning.

In some embodiments, one of the first connecting plate and the housing is provided with a first slider, the other of the first connecting plate and the housing is provided with a first slide rail, and the first slider and the first slide rail are slidably connected. Through the above approach, the first connecting plate and the housing are slidably connected through the cooperation of the first slider and the first slide rail, not only providing guidance to reduce movement deviation of the second conveying mechanism and ensure smoother operation of the second conveying mechanism, but also accelerating the movement speed of the second conveying mechanism.

In some embodiments, the conveying device further includes a second driving assembly, where the second driving assembly is disposed on the moving mechanism and connected to the first conveying mechanism, and is configured to drive the first conveying mechanism to reciprocate along the first direction. Through the above approach, the second driving assembly provides driving force for the reciprocating movements of the first conveying mechanism along the first direction, and implements automated movement of the first conveying mechanism.

In some embodiments, the second driving assembly includes a second driving motor and a second belt, where the second belt sleeves and is rotatably connected to a driving shaft of the second driving motor, and the other end sleeves and is rotatably connected to a second rotating shaft of the moving mechanism, and the second belt is connected to the first conveying mechanism through a second connecting plate. Through the above approach, the second driving motor and the second belt implement the second driving assembly, enabling the first conveying mechanism to translate. This not only results in a simple structure that is easy to implement, but also improves cleanliness of the working environment of the conveying device, reduces dust generation, and facilitates cleaning.

In some embodiments, the first conveying mechanism includes two extension plates disposed opposite each other, and the conveying device includes two third connecting plates disposed opposite each other, where the extension plates and the third connecting plates both extend along the first direction, one of the extension plate and the third connecting plate is provided with a second slider, the other of the extension plate and the third connecting plate is provided with a second slide rail, and the second slider and the second slide rail are slidably connected. Through the above approach, the extension plate and the third connecting plate are slidably connected through the cooperation of the second slider and the second slide rail, not only providing guidance to reduce movement deviation of the first conveying mechanism and ensure smoother operation of the first conveying mechanism, but also accelerating the movement speed of the first conveying mechanism.

In some embodiments, a guide block is disposed at the middle of a bottom of the housing of the moving mechanism, a guide rod extending along the first direction is disposed on a working surface, and the guide rod runs through the guide block. Through the above approach, the guide block and the guide rod can provide guidance to reduce the risk of movement deviation of the first conveying mechanism and ensure smoother operation of the first conveying mechanism, and also accelerate the movement speed of the first conveying mechanism.

In some embodiments, the first conveying mechanism further includes two groups of sensing elements, where one group of sensing elements is disposed on two sides of an end of the first conveying mechanism far from the second conveying mechanism, and the other group of sensing elements is disposed on two sides of an end of the first conveying mechanism close to the second conveying mechanism. Through the above approach, the two groups of sensing elements are used to determine whether a material is in a safe state, improving the safety and reliability of the conveying device.

In some embodiments, the conveying device further includes a control element, where the control element is signal-connected to the sensing elements, the fire-fighting component, and the first driving assembly and the second driving assembly in the moving mechanism; and/or the conveying device further includes a power supply element, where the power supply element is electrically connected to the fire-fighting component, and the first driving assembly and the second driving assembly in the moving mechanism. Through the above approach, the control element enables the material to be transported to a safe station before performing disconnection and translation operations, achieving automated control and further reducing the risk of material dropping during transportation. The power supply element can reduce the risk of improper fire protection disconnection caused by power failure, address the issue of no power supply during fire protection, and drive the conveying device through the power supply element.

In some embodiments, the first conveying mechanism includes a first conveying housing and at least one layer of first conveying assembly disposed on the first conveying housing, and the second conveying mechanism includes the first connecting plate and at least one layer of second conveying assembly disposed on the first connecting plate. Through the above approach, the first conveying housing serves as a framework for the at least one layer of first conveying assembly, improving its stability with a simple structure; and the first connecting plate serves as a framework for the at least one layer of second conveying assembly, improving its stability with a simple structure.

In some embodiments, the first conveying housing rolls on the working surface. Through the above approach, the first conveying housing rolls on the working surface in a rolling manner, not only making it easier for the first conveying mechanism to move, but also improving the efficiency of the first conveying mechanism in quickly moving into the avoidance space.

In some embodiments, the first conveying assembly includes a conveying bracket, a third driving motor, and two third belts, where the two third belts are rotatably connected along the first direction to two ends of the conveying bracket, and a driving shaft of the third driving motor drives the third belts. Through the above approach, the conveying bracket, the third driving motor, and the two third belts interact to implement material transportation. This not only results in a simple structure that is easy to implement, but also improves cleanliness of the working environment of the conveying device, reduces dust generation, and facilitates cleaning.

In some embodiments, the conveying device further includes a fire-fighting component, and when the fire-fighting component is not triggered, the first conveying mechanism is at least partially located below the fire-fighting component. Through the above approach, with the arrangement of the fire-fighting component, the conveying device can implement fire isolation through the fire-fighting component in an emergency, thereby reducing the extent of damage to materials, facilities, equipment, and personnel, and improving the safety of materials and the like.

The above description is only an overview of the technical solution of this application. To provide a clearer understanding of the technical means of this application and enable implementation according to the content of the specification, and to make the above and other objectives, features, and advantages of this application more apparent and understandable, specific embodiments of this application are provided below.

### DESCRIPTION OF DRAWINGS

By reading the detailed description of the preferred embodiments below, those of ordinary skill in the art will be clear about various other advantages and benefits. The drawings are provided solely for the purpose of illustrating the preferred embodiments and are not considered to limit this application. Moreover, throughout the drawings, the same reference signs denote the same components. In the accompanying drawings:
FIG. 1 is a schematic structural diagram of a first embodiment of a conveying device in a first state according to one or more embodiments;
FIG. 2 is a schematic structural diagram of a first embodiment of a conveying device in a second state according to one or more embodiments;
FIG. 3 is a schematic perspective diagram of an embodiment of a conveying device according to one or more embodiments;
FIG. 4 is an enlarged schematic diagram of portion A in FIG. 3;
FIG. 5 is an enlarged schematic diagram of portion B in FIG. 3;
FIG. 6 is an enlarged schematic diagram of portion C in FIG. 3;
FIG. 7 is an enlarged schematic diagram of portion D in FIG. 3;
FIG. 8 is an enlarged schematic diagram of portion E in FIG. 3;
FIG. 9 is a schematic structural diagram of a second embodiment of a conveying device in a first state according to one or more embodiments; and
FIG. 10 is a schematic structural diagram of a second embodiment of a conveying device in a second state according to one or more embodiments.

The reference signs in the specific embodiments are as follows: 10. conveying device; 1. first conveying mechanism; 11. first conveying housing; 12. first conveying assembly; 121. conveying bracket; 122. third driving motor; 123. third belt; 124. extension plate; 125. sensing element; 2. second conveying mechanism; 21. first connecting plate; 211. first slider; 22. second conveying assembly; 3. moving mechanism; 31. housing; 311. accommodation space; 312. avoidance space; 313. first slide rail; 32. first driving assembly; 321. first belt; 33. first rotating shaft; 34. second rotating shaft; 4. second driving assembly; 41. second driving motor; 42. second belt; 43. second connecting plate; 5. third conveying mechanism; 6. fourth conveying mechanism; 71. third connecting plate; 711. second slide rail; 72. guide block; 73. guide rod; 74. fixing base; 75. sensing mounting member; 751. sensing recess groove; 20. fire-fighting component; and 201. fire door.

### DESCRIPTION OF EMBODIMENTS

The embodiments of the technical solution of this application will be described in detail below. The following embodiments are merely used to more clearly illustrate the technical solution of this application and thus serve only as examples, not to limit the scope of protection of this application.

Unless otherwise defined, all technical and scientific terms used herein have the same meanings as commonly understood by those skilled in the technical field of this application; the terms used herein are solely for the purpose of describing specific embodiments and are not intended to limit this application; the terms "including" and "having" and any variations thereof in the specification, claims, and the above description of drawings of this application are intended to cover non-exclusive inclusion.

In the description of the embodiments of this application, technical terms such as "first" and "second" are used only to distinguish different objects and should not be understood as indicating or implying relative importance, or implicitly indicating the number, specific order, or primary-secondary relationship of the technical features indicated. In the description of the embodiments of this application, unless explicitly and specifically limited otherwise, the term "multiple" refers to two or more (including two), and similarly, "multiple groups" refers to two or more groups (including two groups), and "multiple pieces" refers to two or more pieces (including two pieces).

Reference to "embodiment" herein means that a particular feature, structure, or characteristic described in connection with the embodiment may be included in at least one embodiment of this application. The word "embodiment" appearing in various places in the specification does not necessarily refer to the same embodiment or an independent or alternative embodiment that is exclusive of other embodiments. Those skilled in the art explicitly and implicitly understand that the embodiments described herein may be combined with other embodiments.

In the description of the embodiments of this application, the term "and/or" merely describes an association relationship between associated objects, indicating that three relationships may exist, for example, A and/or B may indicate: A exists alone, A and B exist simultaneously, and B exists alone. In addition, the character "/" herein generally indicates that the associated objects before and after are in an "or" relationship.

In the description of the embodiments of this application, technical terms such as "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", and "circumferential" indicating orientation or positional relationships are based on the orientation or positional relationships shown in the drawings, and are merely for the convenience of describing the embodiments of this application and simplifying the description, rather than indicating or implying that the referred device or element must have a specific orientation, be constructed, and operate in a specific orientation, and thus should not be construed as limiting the embodiments of this application.

In the description of the embodiments of this application, unless explicitly specified and limited otherwise, technical terms such as "install", "connect", "connection", and "fix" should be understood in a broad sense, for example, as a fixed connection, a detachable connection, or an integral formation; as a mechanical connection or an electrical connection; as a direct connection or an indirect connection through an intermediary; or as an internal communication between two elements or an interaction relationship between two elements. Those of ordinary skill in the art can understand the specific meanings of the above terms in the embodiments of this application based on specific circumstances.

Fire-fighting components are typically provided between adjacent warehouses. Conveying devices often span below fire doors. When a fire occurs in one warehouse, the fire door in the fire-fighting component closes to prevent the fire from spreading further to another warehouse, minimizing losses. However, due to the obstruction of the conveying devices, the fire door cannot close when a fire occurs in the warehouse.

In the prior art, the conveying device below the fire door is flipped to avoid obstructing the closure of the fire door. However, there is a risk of materials falling onto the working surface from the transportation position of the conveying device, especially for high-risk material transportation.

In view of this, to address the technical problems existing in the conveying devices in the prior art, this application proposes a conveying device. The conveying device translates a first conveying mechanism and a second conveying mechanism as a whole, reducing the risk of material dropping and thereby further improving the safety of material transportation. Additionally, moving the first conveying mechanism and the second conveying mechanism along two perpendicular directions can minimize the impact on the conveying route, making it more convenient to resume material transportation. Therefore, this application can improve the safety of material transportation, and enhance the reliability and working efficiency of the conveying device.

For ease of explanation, the following embodiments are described by using a conveying device according to an embodiment of this application as an example.

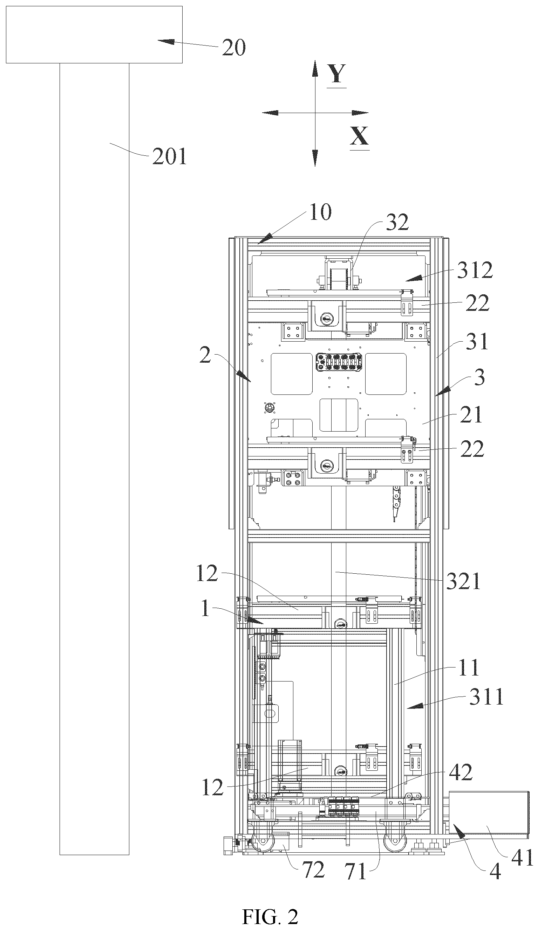

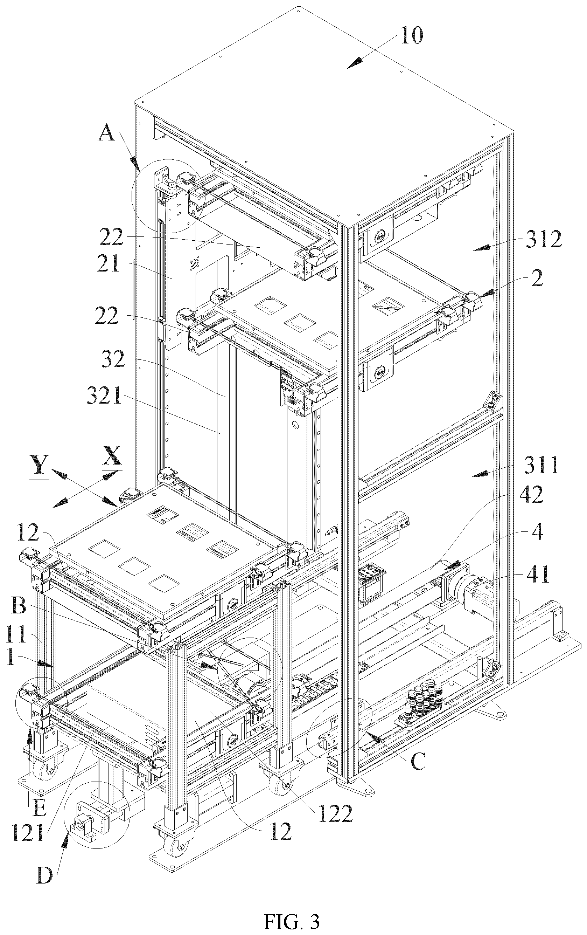

Referring to FIG. 1, FIG. 2, and FIG. 3, FIG. 1 is a schematic structural diagram of a first embodiment of the conveying device in a first state according to one or more embodiments; FIG. 2 is a schematic structural diagram of the first embodiment of the conveying device in a second state according to one or more embodiments; and FIG. 3 is a schematic perspective diagram of an embodiment of the conveying device according to one or more embodiments. According to some embodiments of this application, the conveying device 10 includes a first conveying mechanism 1, a second conveying mechanism 2, and a moving mechanism 3. The first conveying mechanism 1 is at least partially located below a fire-fighting component 20. The first conveying mechanism 1 is capable of moving along a first direction X. The second conveying mechanism 2 is located on one side of the first conveying mechanism 1. The moving mechanism 3 is formed with an accommodation space 311 and an avoidance space 312 arranged along a second direction Y. The second conveying mechanism 2 is disposed in the accommodation space 311. The second direction Y is perpendicular to the first direction X. When the fire-fighting component 20 is triggered, the second conveying mechanism 2 moves along the second direction Y from the accommodation space 311 to the avoidance space 312. The first conveying mechanism 1 moves along the first direction X into the accommodation space 311.

Specifically, part or all of the first conveying mechanism 1 is located below the fire-fighting component 20. The first conveying mechanism 1 is capable of moving along the first direction X, meaning the position of the first conveying mechanism 1 can vary according to actual needs. Both the first conveying mechanism 1 and the second conveying mechanism 2 are used to transport materials. That is, materials are transported from one end of the first conveying mechanism 1 to the second conveying mechanism 2, or materials are transported from one end of the second conveying mechanism 2 to the second conveying mechanism 2. The moving mechanism 3 is formed with the accommodation space 311 and the avoidance space 312. The accommodation space 311 and the avoidance space 312 are arranged along the second direction Y. The avoidance space 312 provides an avoidance position for the second conveying mechanism 2. The accommodation space 311 provides accommodation positions for the second conveying mechanism 2 and the first conveying mechanism 1.

When the fire-fighting component 20 is in a constantly open state, the first conveying mechanism 1 and the second conveying mechanism 2 normally transport materials on a same horizontal plane. When the fire-fighting component 20 is triggered, the second conveying mechanism 2 moves along the second direction Y from the accommodation space 311 to the avoidance space 312 to make way for the first conveying mechanism 1. The first conveying mechanism 1 moves along the first direction X into the avoidance space 312, and in this case, the first conveying mechanism 1 is located at an initial position of the second conveying mechanism 2. There is no interference between the first conveying mechanism 1 and the second conveying mechanism 2. When the fire-fighting component 20 changes from a triggered state to a constantly open state, the first conveying mechanism 1 moves along the first direction X to an initial position of the first conveying mechanism 1. The second conveying mechanism 2 moves along the second direction Y to the initial position of the second conveying mechanism 2.

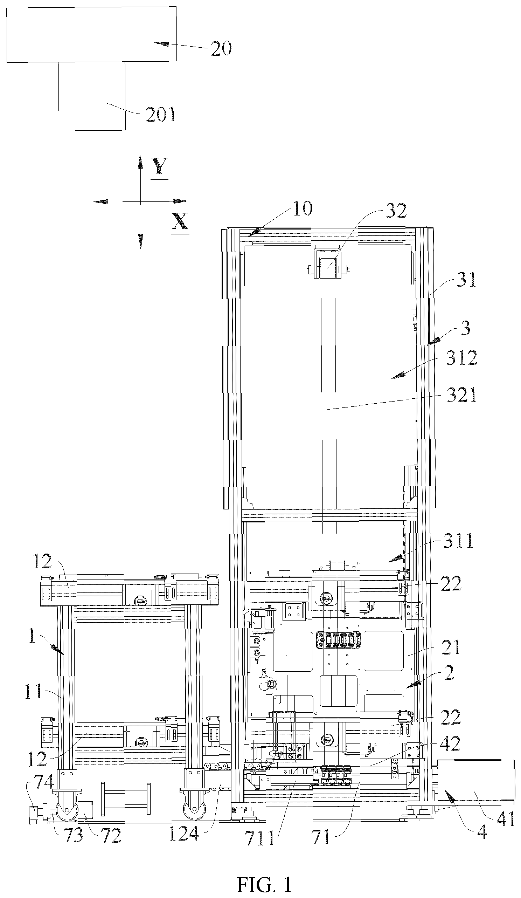

The second conveying mechanism 2 moves along the second direction Y into the avoidance space 312. The second direction Y may be an up-down direction, a front-back direction, or the like, allowing the first conveying mechanism 1 to move to the initial position of the second conveying mechanism 2 without interference between the first conveying mechanism 1 and the second conveying mechanism 2. Additionally, as shown in FIG. 1, the moving mechanism 3 and the second conveying mechanism 2 are located on the right side of the fire-fighting component 20. In practice, the moving mechanism 3 and the second conveying mechanism 2 may alternatively be located on the left side of the fire-fighting component 20, which is not limited herein.

When the fire-fighting component 20 is triggered, fire prevention zone isolation is required. In this case, the second conveying mechanism 2 can move along the second direction Y from the accommodation space 311 of the moving mechanism 3 into the avoidance space 312, and the first conveying mechanism 1 can move along the first direction X from below the fire-fighting component 20 into the vacated accommodation space 311, leaving no objects in the space below the fire-fighting component 20, thereby effectively implementing isolation of the fire prevention zone and improving the safety of material transportation. Moreover, translating the first conveying mechanism 1 and the second conveying mechanism 2 as a whole can reduce the risk of material dropping, further enhancing the safety of material transportation. Additionally, moving the first conveying mechanism 1 and the second conveying mechanism 2 along two perpendicular directions can minimize the impact on the conveying route, making it more convenient to resume material transportation. Therefore, the above approach can improve the safety of material transportation, and enhance the reliability and working efficiency of the conveying device 10.

According to some embodiments of this application, the first direction X includes a transportation direction of the conveying device 10. The second direction Y includes a vertical direction. The avoidance space 312 is located above the accommodation space 311.

Specifically, the second conveying mechanism 2 moves from the accommodation space 311 to the avoidance space 312, or from the avoidance space 312 to the accommodation space 311, implementing vertical movement of the second conveying mechanism 2. The accommodation space 311 and the avoidance space 312 are vertically arranged. When the fire-fighting component 20 is triggered, the second conveying mechanism 2 moves from the accommodation space 311 to the avoidance space 312. The first conveying mechanism 1 moves along the first direction X to the accommodation space 311. In this case, the second conveying mechanism 2 is located above the first conveying mechanism 1. The first conveying mechanism 1 moves by translation, and the second conveying mechanism 2 moves by lifting. That is, the conveying device 10 implements the movement of the first conveying mechanism 1 and the second conveying mechanism 2 through translation and lifting respectively. This not only can move away the first conveying mechanism 1 from below the fire-fighting component 20 to reduce the risk of material dropping from the conveying device 10, but also can reduce interference between the movements of the first conveying mechanism 1 and the second conveying mechanism 2, and minimize the occupied area.

In other embodiments, the avoidance space 312 is located at the front end or rear end of the accommodation space 311. That is, the avoidance space 312 and the accommodation space 311 are arranged front-to-back. When the fire-fighting component 20 is triggered, the second conveying mechanism 2 moves forward to the avoidance space 312, or the second conveying mechanism 2 moves backward to the avoidance space 312. The first conveying mechanism 1 moves along the first direction X to the accommodation space 311. In this case, the first conveying mechanism 1 and the second conveying mechanism 2 are arranged in a front-back direction. The first conveying mechanism 1 is connected by translation. The second conveying mechanism 2 is connected by translation. That is, the conveying device 10 implements the movement of the first conveying mechanism 1 and the second conveying mechanism 2 through two types of translation respectively. This not only can move away the first conveying mechanism 1 from below the fire-fighting component 20, but also can reduce the risk of material dropping from the conveying device 10.

Whether the conveying device 10 uses a combination of translation and lifting or two types of translation, there is no interference when the first conveying mechanism 1 is in the accommodation space 311 and the second conveying mechanism 2 is in the avoidance space 312.

According to some embodiments of this application, the moving mechanism 3 includes a housing 31 and a first driving assembly 32. The avoidance space 312 and the accommodation space 311 are formed in the housing 31. The first driving assembly 32 is disposed on the housing 31 and connected to the second conveying mechanism 2, and is configured to drive the second conveying mechanism 2 to reciprocate along the second direction Y.

Specifically, the housing 31 is configured to form the avoidance space 312. The housing 31 not only provides a mounting position for the first driving assembly 32, but also provides some support for the second conveying mechanism 2. The first driving assembly 32 provides driving force for the movement of the second conveying mechanism 2. The first driving assembly 32 can cause, through a belt, a threaded screw, or the like, the second conveying mechanism 2 to move along the second direction Y. Certainly, the first driving assembly 32 may alternatively be of other structures, which is not limited herein. Through the housing 31 and the first driving assembly 32, the moving mechanism 3 is implemented, not only implementing automated movement of the second conveying mechanism 2, but also improving movement efficiency.

According to some embodiments of this application, the first driving assembly 32 includes a first driving motor (not shown in the figures) and a first belt 321. The first belt 321 sleeves and is rotatably connected to a driving shaft of the first driving motor, and the other end sleeves and is rotatably connected to a first rotating shaft 33 of the housing 31. The first belt 321 is connected to the second conveying mechanism 2 through a first connecting plate 21.

Specifically, the first driving motor provides driving force for the first belt 321. The first driving motor can be disposed on the working surface or at the bottom of the housing 31, which is not limited. The first rotating shaft 33 is rotatably connected to the housing 31. The first belt 321 sleeves the driving shaft of the first driving motor and the first rotating shaft 33. The second conveying mechanism 2 includes the first connecting plate 21. The first belt 321 is connected to the first connecting plate 21 in the second conveying mechanism 2. The first connecting plate 21 is detachably connected to the first belt 321.

During the process of the driving shaft of the first driving motor drives the first belt 321 to rotate, the first rotating shaft 33 also rotates, that is, the first belt 321 drives the second conveying mechanism 2 to move along the second direction Y. Through the first driving motor and the first belt 321, the first driving assembly 32 is implemented, enabling the second conveying mechanism 2 to lift or translate This not only results in a simple structure that is easy to implement, but also improves cleanliness of the working environment of the conveying device 10, reduces dust generation, and facilitates cleaning.

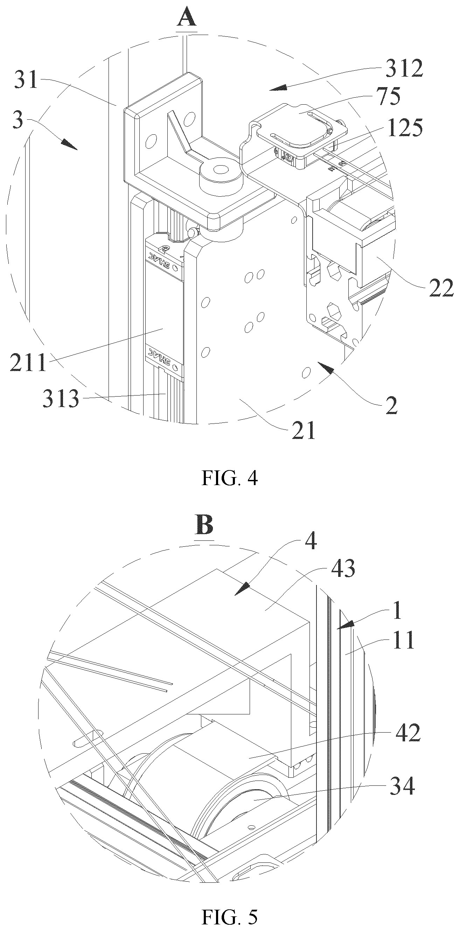

Referring to FIG. 4, FIG. 4 is an enlarged schematic diagram of portion A in FIG. 3. In conjunction with FIG. 1 to FIG. 3, according to some embodiments of this application, one of the first connecting plate 21 and the housing 31 is provided with a first slider 211, and the other of the first connecting plate 21 and the housing 31 is provided with a first slide rail 313. The first slider 211 and the first slide rail 313 are slidably connected.

Specifically, the first connecting plate 21 and the housing 31 are slidably connected through the cooperation of the first slider 211 and the first slide rail 313, not only providing guidance to reduce movement deviation of the second conveying mechanism 2 and ensure smoother operation of the second conveying mechanism 2, but also accelerating the movement speed of the second conveying mechanism 2.

In a specific embodiment, the first slider 211 is provided on a side surface of the first connecting plate 21 facing the housing 31. The first slider 211 is fixedly or detachably connected to the first connecting plate 21. The first slide rail 313 is provided on a side surface of the housing 31 facing the first connecting plate 21. The first slide rail 313 is fixedly or detachably connected to the first connecting plate 21. The first slider 211 is slidably connected to the first slide rail 313.

In another specific embodiment, the first slide rail 313 is provided on a side surface of the first connecting plate 21 facing the housing 31. The first slide rail 313 is fixedly or detachably connected to the first connecting plate 21. The first slider 211 is provided on a side surface of the housing 31 facing the first connecting plate 21. The first slider 211 is fixedly or detachably connected to the first connecting plate 21. The first slider 211 is slidably connected to the first slide rail 313.

According to some embodiments of this application, the conveying device 10 further includes a second driving assembly 4. The second driving assembly 4 is disposed on the moving mechanism 3 and connected to the first conveying mechanism 1, and is configured to drive the first conveying mechanism 1 to reciprocate along the first direction X.

Specifically, the second driving assembly 4 is disposed on the moving mechanism 3 or the working surface. The second driving assembly 4 provides driving force for the reciprocating movements of the first conveying mechanism 1 along the first direction X, and implements automated movement of the first conveying mechanism 1. The second driving assembly 4 can cause, through a belt, a threaded screw, or the like, the first conveying mechanism 1 to reciprocate along the first direction X. Certainly, the second driving assembly 4 may alternatively be of other structures, which is not limited herein.

Referring to FIG. 5. FIG. 5 is an enlarged schematic diagram of portion B in FIG. 3. In conjunction with FIG. 1 to FIG. 3, according to some embodiments of this application, the second driving assembly 4 includes a second driving motor 41 and a second belt 42. The second belt 42 sleeves and is rotatably connected to a driving shaft of the second driving motor 41, and the other end sleeves and is rotatably connected to a second rotating shaft 34 of the moving mechanism 3. The second belt 42 is connected to the first conveying mechanism 1 through a second connecting plate 43.

Specifically, the second driving motor 41 provides driving force for the rotation of the second belt 42. The second driving motor 41 can be disposed on the working surface or at the bottom of the housing 31. The second rotating shaft 34 is rotatably connected to the housing 31. The second belt 42 sleeves the driving shaft of the second driving motor 41 and the second rotating shaft 34. The second connecting plate 43 serves a connecting function. The second connecting plate 43 can connect the second belt 42 and the first conveying mechanism 1. One end of the second connecting plate 43 is detachably connected to the second belt 42. The other end of the second connecting plate 43 is detachably connected to the first conveying mechanism 1.

During the process of the driving shaft of the second driving motor 41 driving the second belt 42 to rotate, the second rotating shaft 34 also rotates, that is, the second belt 42 drives the second connecting plate 43 to move the first conveying mechanism 1 to reciprocate along the first direction X. Through the combination of the second driving motor 41 and the second belt 42, the second driving assembly 4 is implemented, enabling the first conveying mechanism 1 to translate. This not only results in a simple structure that is easy to implement, but also improves cleanliness of the working environment of the conveying device 10, reduces dust generation, and facilitates cleaning.

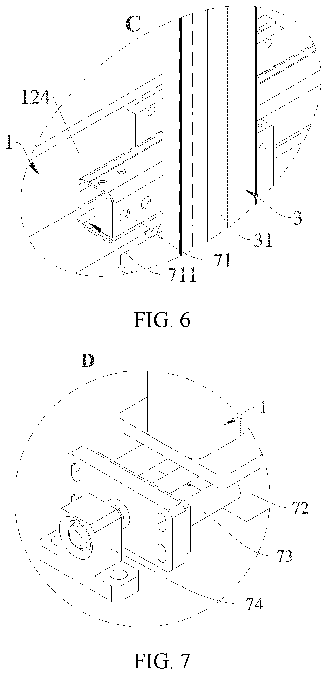

Referring to FIG. 6, FIG. 6 is an enlarged schematic diagram of portion C in FIG. 3. In conjunction with FIG. 1 to FIG. 3, according to some embodiments of this application, the first conveying mechanism 1 includes two extension plates 124 disposed opposite each other. The conveying device 10 includes two third connecting plates 71 disposed opposite each other. The extension plates 124 and the third connecting plates 71 both extend along the first direction X. One of the extension plate 124 and the third connecting plate 71 is provided with a second slider (not shown in the figures), the other of the extension plate 124 and the third connecting plate 71 is provided with a second slide rail 711, and the second slider and the second slide rail 711 are slidably connected.

Specifically, the two extension plates 124 are disposed opposite each other. The two third connecting plates 71 are also disposed opposite each other. The two extension plates 124 and the two third connecting plates 71 both extend along the first direction X. The extension plate 124 and the third connecting plate 71 are slidably connected through the cooperation of the second slider and the second slide rail 711, not only providing guidance to reduce movement deviation of the first conveying mechanism 1 and ensure smoother operation of the first conveying mechanism 1, but also accelerating the movement speed of the first conveying mechanism 1.

In a specific embodiment, the second slider is provided on a side surface of the extension plate 124 facing the third connecting plate 71. The second slider is fixedly or detachably connected to the third connecting plate 71. The second slide rail 711 is provided on a side surface of the third connecting plate 71 facing the extension plate 124. The second slide rail 711 is fixedly or detachably connected to the third connecting plate 71. The second slider and the second slide rail 711 are slidably connected.

In another specific embodiment, the second slide rail 711 is provided on a side surface of the extension plate 124 facing the third connecting plate 71. The second slide rail 711 is fixedly or detachably connected to the third connecting plate 71. The second slider is provided on a side surface of the third connecting plate 71 facing the extension plate 124. The second slider is fixedly or detachably connected to the third connecting plate 71. The second slider and the second slide rail 711 are slidably connected.

The third connecting plate 71 may be disposed on the working surface or at the bottom of the housing 31. The working surface may be the ground, a workbench surface, or the like. Additionally, the two third extension plates 124 are respectively located at positions on two sides of the bottom of the housing 31, making the operation of the first conveying mechanism 1 more stable.

Referring to FIG. 7, FIG. 7 is an enlarged schematic diagram of portion D in FIG. 3. In conjunction with FIG. 1 to FIG. 3, according to some embodiments of this application, a guide block 72 is disposed at the middle of a bottom of the housing 31 of the moving mechanism 3. A guide rod 73 extending along the first direction X is disposed on a working surface. The guide rod 73 runs through the guide block 72.

Specifically, the guide block 72 is fixedly or detachably disposed at the middle of the bottom of the housing 31. The guide rod 73 extends along the first direction X. During the reciprocating movement of the first conveying mechanism 1 along the first direction X, the guide block 72 and the guide rod 73 can provide guidance, reducing movement deviation of the first conveying mechanism 1, enhancing the operation smoothness of the first conveying mechanism 1, and accelerating the movement speed of the first conveying mechanism 1.

In practice, to enable the guide rod 73 to extend along the first direction X, a fixing base 74 is provided on the working surface. One end of the guide rod 73 is fixed to the fixing base 74. One, two, three, or more guide rods 73 can be provided, which is not limited herein. Certainly, in other embodiments, the guide block 72 may be disposed on the working surface. The guide rod 73 is disposed at the middle position of the bottom of the housing 31. An extension length of the guide rod 73 is not limited and can be determined based on actual conditions.

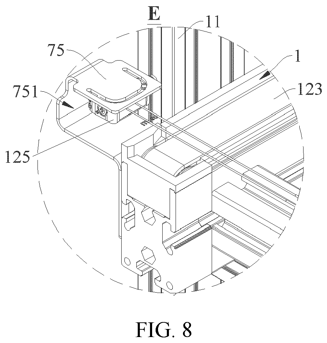

Referring to FIG. 8, FIG. 8 is an enlarged schematic diagram of portion E in FIG. 3. In conjunction with FIG. 1 to FIG. 3, according to some embodiments of this application, the first conveying mechanism 1 further includes two groups of sensing elements 125. One group of sensing elements 125 is disposed on two sides of an end of the first conveying mechanism 1 far from the second conveying mechanism 2. The other group of sensing elements 125 is disposed on two sides of an end of the first conveying mechanism 1 close to the second conveying mechanism 2.

Specifically, the two groups of sensing elements 125 include four sensing elements 125. The sensing elements 125 have a sensing function. The two groups of sensing elements 125 are respectively disposed on two sides of the end of the first conveying mechanism 1 far from the second conveying mechanism 2 and on two sides of the end of the first conveying mechanism 1 close to the second conveying mechanism 2, that is, the two groups of sensing elements 125 are disposed at the front end and rear end of the first conveying mechanism 1 along the first direction X, and are used to determine whether the material is in a safe state, improving the safety and reliability of the conveying device 10. After the material is transported to a safe station, the related movements of the first conveying mechanism 1 and the second conveying mechanism 2 move to implement disconnection and translation operations, thereby reducing the risk of material dropping during transportation. The sensing elements 125 may be opposed photoelectric sensors, or certainly, may be other sensors, which is not limited herein.

According to some embodiments of this application, the conveying device 10 further includes a control element (not shown in the figures), where the control element is signal-connected to the sensing elements 125, the fire-fighting component 20, and the first driving assembly 32 and the second driving assembly 4 in the moving mechanism 3; and/or the conveying device 10 further includes a power supply element (not shown in the figures), where the power supply element is electrically connected to the fire-fighting component 20, and the first driving assembly 32 and the second driving assembly 4 in the moving mechanism 3.

Specifically, when a fire occurs, the sensing elements 125 sense that the material is not at a safe station, the first conveying mechanism 1 first places the material at a safe station, and then the control element controls the first driving assembly 32 to move the second conveying mechanism 2, and also controls the second driving assembly 4 to move the first conveying mechanism 1. After the fire is extinguished, the control element controls the first driving assembly 32 and the second driving assembly 4 to move, thereby causing the first conveying mechanism 1 and the second conveying mechanism 2 to the return their original positions. Through the above approach, the material can be transported to a safe station before performing disconnection and translation operations, achieving automated control and further reducing the risk of material dropping during transportation.

The power supply element can provide a certain amount of electrical energy. The power supply element acts on the conveying device 10 to transport the material to a safe station, and then moves the first conveying mechanism 1 and the second conveying mechanism 2, thereby implementing the disconnection operation of the conveying device 10. The above approach reduces the risk of improper fire protection disconnection caused by power failure, addresses the issue of no power supply during fire protection, and drives the conveying device 10 through the power supply element. The power supply element may be an uninterruptible power supply or the like.

According to some embodiments of this application, the first conveying mechanism 1 includes a first conveying housing 11 and at least one layer of first conveying assembly 12 disposed on the first conveying housing 11. The second conveying mechanism 2 includes the first connecting plate 21 and at least one layer of second conveying assembly 22 disposed on the first connecting plate 21.

Specifically, the first conveying housing 11 provides a mounting position for the at least one layer of first conveying assembly 12. The first conveying housing 11 serves as a framework for the at least one layer of first conveying assembly 12, improving its stability with a simple structure. One, two, three, or more layers of first conveying assemblies 12 can be provided. For example, in this embodiment, two layers of first conveying assemblies 12 are provided. The first connecting plate 21 provides a mounting position for the at least one layer of second conveying assembly 22. The first connecting plate 21 serves as a framework for the at least one layer of second conveying assembly 22, improving its stability with a simple structure. One, two, three, or more layers of second conveying assemblies 22 can be provided. For example, in this embodiment, two layers of second conveying assemblies 22 are provided.

Additionally, through the at least one layer of the first conveying assembly 12 and at least one layer of the second conveying assembly 22, the conveying device 10 is suitable for one-layer, two-layer, three-layer, or more logistics lines, meeting various transportation forms and having wide applicability. When the first conveying mechanism 1 is disconnected from the second conveying mechanism 2, several first conveying assemblies 12 and several second conveying assemblies 22 are all in a disconnected state.

Further, the structure of the first conveying assembly 12 and the structure of the second conveying assembly 22 may be the same, that is, the first conveying assembly 12 and the second conveying assembly 22 are independent without affecting each other. The structure of the first conveying assembly 12 and the structure of the second conveying assembly 22 are set to be consistent, facilitating consistency in material transportation.

According to some embodiments of this application, the first conveying housing 11 rolls on the working surface.

Specifically, the first conveying housing 11 rolls on the working surface, not only making it easier for the first conveying mechanism 1 to move, but also improving the efficiency of the first conveying mechanism 1 in quickly moving into the avoidance space 312.

Further, a rolling element (not shown in the figures) is disposed at the bottom of the first conveying housing 11. The first conveying housing 11 rolls on the working surface through the rolling element, facilitating quick overall translation of the first conveying mechanism 1. The specific structure and number of the rolling elements are not limited and can be determined based on actual needs.

In practice, when the second conveying mechanism 2 moves back and forth in the avoidance space 312, the rolling element can be disposed for the second conveying mechanism 2 to facilitate quick overall translation of the second conveying mechanism 2.

According to some embodiments of this application, the first conveying assembly 12 includes a conveying bracket 121, a third driving motor 122, and two third belts 123. The two third belts 123 are rotatably connected along the first direction X to two ends of the conveying bracket 121. The driving shaft of the third driving motor 122 drives the third belts 123.

Specifically, the conveying bracket 121 provides a mounting position for the third driving motor 122 and the two third belts 123. The first conveying assembly 12 is disposed on the first conveying housing 11 through the conveying bracket 121. One third belt 123 rotates along the first direction X at one end of the conveying bracket 121. The other third belt 123 rotates along the first direction X at the other end of the conveying bracket 121. The third driving motor 122 provides driving force for the rotation of the two third belts 123. The third driving motor 122 drives the two third belts 123 to rotate simultaneously along the first direction X on the conveying bracket 121 through its driving shaft, thereby ensuring speed consistency of the two third belts 123.

The conveying bracket 121, the third driving motor 122, and the two third belts 123 interact to implement material transportation. This not only results in a simple structure that is easy to implement, but also improves cleanliness of the working environment of the conveying device 10, reduces dust generation, and facilitates cleaning. The second conveying assembly 22 further includes the conveying bracket 121, the third driving motor 122, two third belts 123, and the like, which is not detailed herein. When the sensing elements 125 sense that the material is in a non-safe state, the third driving motor 122 and the two third belts 123 work together to drive the material to a safe station.

In some embodiments, one group of sensing elements 125 is disposed on two sides of an end of the conveying bracket 121 far from the second conveying mechanism 2, and the other group of sensing elements 125 is disposed on two sides of an end of the conveying bracket 121 close to the second conveying mechanism 2. The two groups of sensing elements 125 are respectively disposed on two sides of the end of the conveying bracket 121 far from the second conveying mechanism 2 and on two sides of the end of the conveying bracket 121 close to the second conveying mechanism 2, that is, the two groups of sensing elements 125 are disposed at the front end and rear end of the conveying bracket 121 along the first direction X, and used to determine whether the material is in a safe state.

Further, sensing mounting members 75 are disposed on two sides of the end of the conveying bracket 121 far from the second conveying mechanism 2 and on two sides of the end of the conveying bracket 121 close to the second conveying mechanism 2. A side surface of the sensing mounting member 75 facing the conveying bracket 121 is recessed to form a sensing recess groove 751. The sensing element 125 is disposed in the recess groove.

According to some embodiments of this application, the conveying device 10 further includes a fire-fighting component 20. When the fire-fighting component 20 is not triggered, the first conveying mechanism 1 is at least partially located below the fire-fighting component 20.

Specifically, part or all of the first conveying mechanism 1 is located below the fire-fighting component 20. With arrangement of the fire-fighting component 20, the conveying device 10 can implement fire isolation through the fire-fighting component 20 in an emergency, thereby reducing the extent of damage to materials, facilities, equipment, and personnel, and improving the safety of materials and the like.

Further, the fire-fighting component 20 includes a fire-fighting motor (not shown in the figures) and a fire door 201. The fire-fighting motor drives the movement of the fire door 201. The fire door 201 may be a lifting roller shutter door or a horizontally-sliding door. When the fire door 201 is a lifting roller shutter door, the fire-fighting motor drives the lifting roller shutter door to roll up or unfold.

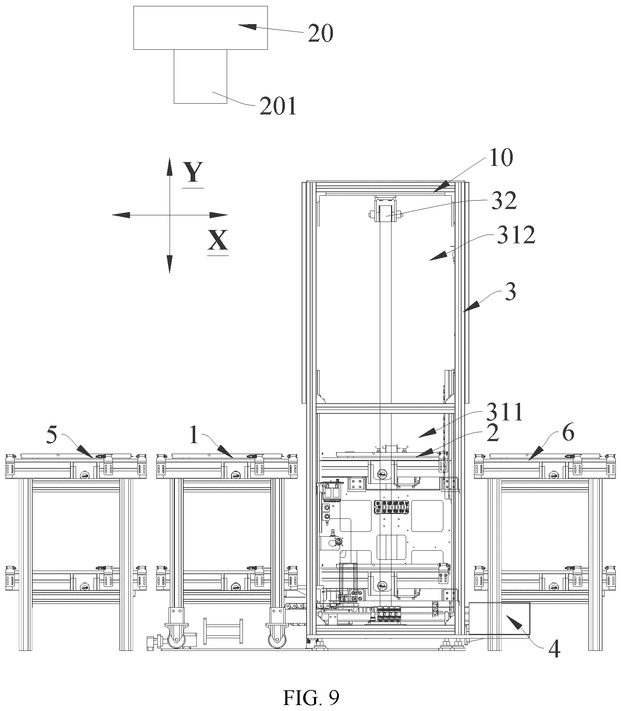

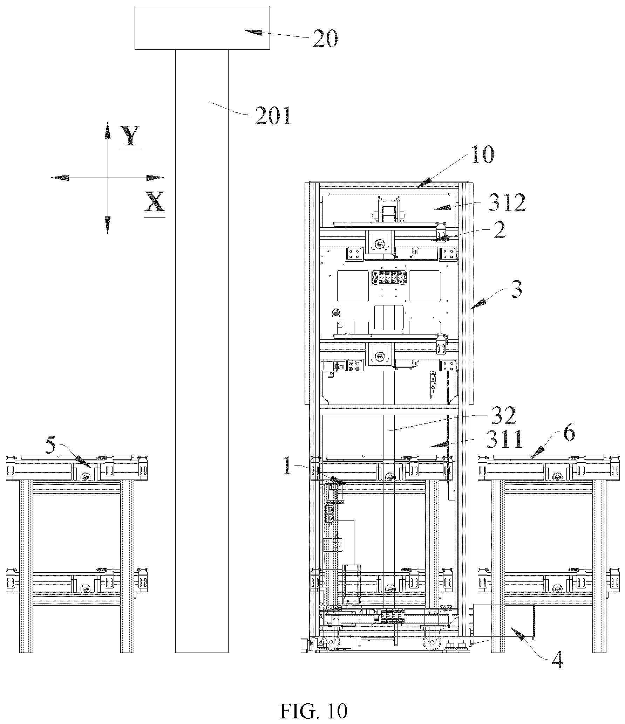

Referring to FIG. 9 and FIG. 10, FIG. 9 is a schematic structural diagram of a second embodiment of a conveying device in a first state according to one or more embodiments; and FIG. 10 is a schematic structural diagram of a second embodiment of a conveying device in a second state according to one or more embodiments. In conjunction with FIG. 1 to FIG. 3, in some embodiments, the conveying device 10 further includes a third conveying mechanism 5. The third conveying mechanism 5 is located at an end of the first conveying mechanism 1 facing away from the second conveying mechanism 2. And/or, the conveying device 10 further includes a fourth conveying mechanism 6. The fourth conveying mechanism 6 is located at an end of the second conveying mechanism 2 facing away from the first conveying mechanism 1.

In a specific embodiment, the third conveying mechanism 5 is located at an end of the first conveying mechanism 1 facing away from the second conveying mechanism 2. The first conveying mechanism 1 is located between the third conveying mechanism 5 and the second conveying mechanism 2. The third conveying mechanism 5, the first conveying mechanism 1, and the second conveying mechanism 2 are on a same plane and can be used to transport materials. When the conveying device 10 includes the third conveying mechanism 5, one moving mechanism 3 can be provided. For example, the moving mechanism 3 can be disposed at the position of the second conveying mechanism 2, or the moving mechanism 3 can be disposed at the position of the third conveying mechanism 5. Alternatively, two moving mechanisms 3 can be provided, with one disposed at the second conveying mechanism 2 and the other disposed at the third conveying mechanism 5.

In another specific embodiment, the fourth conveying mechanism 6 is located at an end of the second conveying mechanism 2 facing away from the first conveying mechanism 1. The second conveying mechanism 2 is located between the first conveying mechanism 1 and the fourth conveying mechanism 6. The first conveying mechanism 1, the second conveying mechanism 2, and the fourth conveying mechanism 6 are on a same plane and can be used to transport materials.

In other specific embodiments, the conveying device 10 includes both the third conveying mechanism 5 and the fourth conveying mechanism 6. The third conveying mechanism 5, the first conveying mechanism 1, the second conveying mechanism 2, and the fourth conveying mechanism 6 are on a same plane and can be used to transport materials. The structure of the third conveying mechanism 5 and the structure of the fourth conveying mechanism 6 are similar to the structure of the first conveying mechanism 1, and details are not described herein.

Finally, in a specific application scenario, the conveying device 10 includes a first conveying mechanism 1, a second conveying mechanism 2, a third conveying mechanism 5, a fourth conveying mechanism 6, and a moving mechanism 3. The first conveying mechanism 1 is located between the second conveying mechanism 2 and the third conveying mechanism 5. The second conveying mechanism 2 is located between the first conveying mechanism 1 and the fourth conveying mechanism 6. The second conveying mechanism 2 is located below an avoidance space 312. The third conveying mechanism 5, the first conveying mechanism 1, the second conveying mechanism 2, and the fourth conveying mechanism 6 are on a same plane and used to transport materials. When a sensing element 125 on the first conveying mechanism 1 senses that the material is in a non-safe state, the sensing element 125 transmits a signal to a control element, and the control element controls a first conveying assembly 12 to transport the material to a safe station. When the sensing element 125 senses that the material has reached the safe station, the sensing element 125 transmits a signal to the control element. The control element controls the first driving assembly 32 to lift the second conveying mechanism 2 above the avoidance space 312. Also, the control element controls a second driving assembly 4 to translate the first conveying mechanism 1 below the avoidance space 312. In this case, the second conveying mechanism 2 is located above the first conveying mechanism 1. Then, the control element triggers a fire-fighting component 20 to descend. The conveying device 10 adopts a translation method rather than a flipping method, reducing the risk of material dropping during transportation.

A power supply element is electrically connected to the fire-fighting component 20, and the first driving assembly 32 and the second driving assembly 4 in the moving mechanism 3, and is used to provide power to the conveying device 10 when a fire occurs. After the fire is extinguished, the control element controls the fire-fighting component 20 to ascend, controls the second driving assembly 4 to drive the first conveying mechanism 1 to return to its original position, and also controls the first driving assembly 32 to drive the second conveying mechanism 2 to return to its original position.

Finally, it should be noted that: the above embodiments are merely used to illustrate the technical solution of this application, rather than to limit it; although this application has been described in detail with reference to the foregoing embodiments, those of ordinary skill in the art should understand that: modifications can still be made to the technical solutions described in the foregoing embodiments, or equivalent replacements can be made to some or all of the technical features thereof; and these modifications or replacements do not cause the essence of the corresponding technical solutions to depart from the scope of the technical solutions of the embodiments of this application, and they should all be encompassed within the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A conveying device, comprising:
a first conveying mechanism, at least partially located below a fire-fighting component, wherein the first conveying mechanism is capable of moving along a first direction;
a second conveying mechanism, located on one side of the first conveying mechanism; and
a moving mechanism, formed with an accommodation space and an avoidance space arranged along a second direction, wherein the second conveying mechanism is disposed in the accommodation space, and the second direction is perpendicular to the first direction; wherein
when the fire-fighting component is triggered, the second conveying mechanism moves along the second direction from the accommodation space to the avoidance space, and the first conveying mechanism moves along the first direction to the accommodation space.

2. The conveying device according to claim 1, wherein the first direction comprises a transportation direction of the conveying device, the second direction comprises a vertical direction, and the avoidance space is located above the accommodation space.

3. The conveying device according to claim 1 or 2, wherein the moving mechanism comprises a housing and a first driving assembly, wherein the avoidance space and the accommodation space is formed in the housing, and the first driving assembly is disposed on the housing and connected to the second conveying mechanism, and is configured to drive the second conveying mechanism to move along the second direction.

4. The conveying device according to any one of claims 1 to 3, wherein the first driving assembly comprises a first driving motor and a first belt, wherein the first belt sleeves and is rotatably connected to a driving shaft of the first driving motor, and the other end sleeves and is rotatably connected to a first rotating shaft of the housing, and the first belt is connected to a first connecting plate in the second conveying mechanism.

5. The conveying device according to any one of claims 1 to 4, wherein one of the first connecting plate and the housing is provided with a first slider, the other of the first connecting plate and the housing is provided with a first slide rail, and the first slider and the first slide rail are slidably connected.

6. The conveying device according to any one of claims 1 to 5, wherein the conveying device further comprises a second driving assembly, wherein the second driving assembly is disposed on the moving mechanism and connected to the first conveying mechanism, and is configured to drive the first conveying mechanism to reciprocate along the first direction.

7. The conveying device according to any one of claims 1 to 6, wherein the second driving assembly comprises a second driving motor and a second belt, wherein the second belt sleeves and is rotatably connected to a driving shaft of the second driving motor, and the other end sleeves and is rotatably connected to a second rotating shaft of the moving mechanism, and the second belt is connected to the first conveying mechanism through a second connecting plate.

8. The conveying device according to any one of claims 1 to 7, wherein the first conveying mechanism comprises two extension plates disposed opposite each other, and the conveying device comprises two third connecting plates disposed opposite each other, wherein the extension plates and the third connecting plates both extend along the first direction, one of the extension plate and the third connecting plate is provided with a second slider, the other of the extension plate and the third connecting plate is provided with a second slide rail, and the second slider and the second slide rail are slidably connected.

9. The conveying device according to any one of claims 1 to 7, wherein a guide block is disposed at the middle of a bottom of the housing of the moving mechanism, a guide rod extending along the first direction is disposed on a working surface, and the guide rod runs through the guide block.

10. The conveying device according to any one of claims 1 to 9, wherein the first conveying mechanism further comprises two groups of sensing elements, one group of the sensing elements is disposed on two sides of an end of the first conveying mechanism far from the second conveying mechanism, and the other group of the sensing elements is disposed on two sides of an end of the first conveying mechanism close to the second conveying mechanism.

11. The conveying device according to any one of claims 1 to 10, wherein the conveying device further comprises a control element, and the control element is signal-connected to the sensing elements, the fire-fighting component, and the first driving assembly and the second driving assembly in the moving mechanism; and/or
the conveying device further comprises a power supply element, and the power supply element is electrically connected to the fire-fighting component, and the first driving assembly and the second driving assembly in the moving mechanism.

12. The conveying device according to any one of claims 1 to 11, wherein the first conveying mechanism comprises a first conveying housing and at least one layer of first conveying assembly disposed on the first conveying housing, and the second conveying mechanism comprises the first connecting plate and at least one layer of second conveying assembly disposed on the first connecting plate.

13. The conveying device according to any one of claims 1 to 12, wherein the first conveying housing rolls on the working surface.

14. The conveying device according to any one of claims 1 to 12, wherein the first conveying assembly comprises a conveying bracket, a third driving motor, and two third belts, wherein the two third belts are rotatably connected along the first direction to two ends of the conveying bracket, and a driving shaft of the third driving motor drives the third belts.

15. The conveying device according to any one of claims 1 to 14, wherein the conveying device further comprises a fire-fighting component, and when the fire-fighting component is not triggered, the first conveying mechanism is at least partially located below the fire-fighting component.
